# EUROPEAN PATENT SPECIFICATION

(11) **EP 4 218 182 B1**
(45) Date of publication and mention of the grant of the patent: **28.08.2024**
(21) Application number: 21806463.2
(22) Date of filing: 29.09.2021
(51) Int. Cl.: H04L 1/18

(54) **METHOD OF SUPPORTING INDUSTRIAL INTERNET OF THINGS (IIOT) WITH CONFIGURED UPLINK GRANTS ON A SHARED SPECTRUM**
VERFAHREN ZUR UNTERSTÜTZUNG DES INDUSTRIELLEN INTERNETS DER DINGE (IIOT) MIT KONFIGURIERTEN UPLINK-GENEHMIGUNGEN AUF EINEM GEMEINSAMEN SPEKTRUM
PROCÉDÉ DE PRISE EN CHARGE D'INTERNET INDUSTRIEL DES OBJETS (IIOT) AVEC OCTROIS DE LIAISON MONTANTE CONFIGURÉS SUR UN SPECTRE PARTAGÉ

(30) Priority: 22.10.2020 US 202063104081 P; 22.10.2020 US 202063104198 P
(43) Date of publication of application: 02.08.2023
(73) Proprietor: Google LLC, Mountain View, CA 94043 (US)
(72) Inventor: YE, Shiangrung, Mountain View, CA 94043 (US); WANG, Jibing, Mountain View, CA 94043 (US); NUGGEHALLI, Pavan, Mountain View, CA 94043 (US)
(74) Representative: Marks & Clerk GST
(86) International application number: PCT/US2021/052627
(87) International publication number: WO 2022/086683

(56) References cited:
- WO-A1-2020/033395
- WO-A1-2020/198499
- US-A1- 2020 260 486

## Description

### FIELD OF THE DISCLOSURE

This disclosure relates to wireless communications and, more particularly, to supporting transmission of industrial Internet of Things (IIOT) data in an unlicensed or otherwise shared spectrum.

### BACKGROUND

This background description is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Some wireless communication networks allow compatible devices to share an unlicensed carrier with other radio access technologies. In such cases, to promote fair use of the shared medium, devices operating in the unlicensed carrier typically need to perform channel access procedures before transmitting messages. In particular, a device may need to listen for other communications (i.e., detect energy) on the unlicensed carrier before using the carrier to transmit information, thereby reducing or eliminating interference with the communications of other networks/devices operating on that unlicensed carrier.

If a UE with IIOT data has more than one uplink grant to transmit data, the media access control (MAC) layer will prioritize only one of available grants and deprioritize other grants. Then the MAC layer uses the prioritized grant to generate a MAC protocol data unit (PDU) for the IIOT transmission. However, in situations where industrial Internet of Things (IIOT) data is deployed in the unlicensed spectrum (NR-U), if a listen-before-talk (LBT) failure occurs when transmitting IIOT data the MAC layer will not autonomously (re)transmit the MAC PDU.

More specifically, the 3rd Generation Partnership Project (3GPP) specification for fifth-generation (5G) radio access ("NR") networks, and specifically 3GPP Release 16 (Rel-16) for NR-U supports autonomous retransmission using a configured grant. However, 3GPP Release 17 (Rel-17) for IIOT data does not support autonomous retransmission.

Moreover, if the prioritized grant is a configured grant, the base station does not know that UE needs to retransmit the MAC PDU. Accordingly, the base station will not schedule a retransmission for the UE, thereby resulting in data loss. Therefore, there are opportunities with IIOT data operating in NR-U to increase the benefits of autonomous retransmission when appropriate, such as lower overhead and delay when LBT failure occurs, and also reduce some of the drawbacks of autonomous retransmission.

US 2020/0260486 A1 relates to a wireless device that receives configuration parameters of one or more configured grants of an unlicensed cell. The wireless device receives a downlink control information indicating an uplink grant for a first TB corresponding to a first HARQ process.

### SUMMARY

In accordance with the invention, there is provided: a method in a UE as recited by claim 1; and a user device as recited by claim 10.

To cause the UE to autonomously (re)transmit IIOT data in the unlicensed spectrum when an LBT failure occurs, the UE deprioritizes a prioritized configured uplink grant. The UE then selects another configured grant opportunity to transmit the MAC PDU including the IIOT data. The UE may select the configured grant opportunity based on the size of the configured uplink grant matching the size of the MAC PDU, logical channels (LCHs) including the IIOT data being allowed to use the configured grant opportunity, and/or the configured grant type for the configured grant opportunity being allowed for the LCHs including the IIOT data. If these conditions are met, the Hybrid Automatic Repeat Request (HARQ) process associated with the MAC PDU may be changed to the HARQ process for the selected configured grant opportunity.

In some implementations, the UE may determine whether the UE has been configured for HARQ retransmission. If the UE is configured for HARQ retransmission, the UE performs a HARQ retransmission to retransmit the MAC PDU. On the other hand, if the UE is not configured for HARQ retransmission, the UE selects another configured grant opportunity and performs a HARQ new transmission to retransmit the MAC PDU using the HARQ process for the selected configured grant opportunity.

In some implementations, the base station may provide a retransmission counter to the UE. If the number of retransmission is less than the retransmission counter, the UE may retransmit the MAC PDU. Otherwise, the UE stops retransmitting the MAC PDU.

One example embodiment of these techniques is a method in a UE for transmitting IIOT data on a communication channel in an unlicensed spectrum. The method can be implemented in the UE using processing hardware and includes receiving, from a base station, a one or more configured uplink grants for transmitting data in an unlicensed spectrum, prioritizing one of the one or more configured uplink grants, generating a data packet for the prioritized configured uplink grant, and performing a listen-before-talk (LBT) procedure with the base station. In response to determining the LBT procedure has failed, the method includes identifying another configured grant opportunity to transmit the data packet, and transmitting, to the base station, a first transmission for the data packet via the other configured grant opportunity.

Another example embodiment of these techniques is a user device with processing hardware and configured to execute the methods above.

### BRIEF DESCRIPTION OF THE DRAWINGS

Fig. 1 is a block diagram of an example wireless communication network that implements the autonomous (re)transmission techniques of this disclosure;
Fig. 2 is a messaging diagram of an example procedure for autonomous (re)transmission in the unlicensed spectrum using configured uplink grants;
Fig. 3 is a messaging diagram of an example procedure for autonomous (re)transmission in the unlicensed spectrum using configured uplink grants and a retransmission counter;
Fig. 4 is a flow diagram of an example method for autonomous (re)transmission in the unlicensed spectrum using configured uplink grants when transmitting IIOT data on a communication channel, which can be implemented in the UE of Fig. 1; and
Fig. 5 is a flow diagram of another example method for autonomous (re)transmission in the unlicensed spectrum using configured uplink grants when transmitting IIOT data on a communication channel, which can be implemented in the UE of Fig. 1.

### DETAILED DESCRIPTION OF THE DRAWINGS

Using the techniques of this disclosure, a communication device such as a UE performs procedures to support transmitting IIOT data on a shared carrier in a manner that reduces the delay in starting a transmission (e.g., an uplink transmission that requires configuration of the UE). As the term is used herein, a "carrier" may be any type of frequency spectrum or band, which corresponds to at least one channel in a given radio access network. Moreover, as used herein, a "shared" carrier may be an unlicensed carrier that is shared by different radio access networks and/or technologies, or a carrier that is shared in some other way and/or for some other reason (e.g., a carrier shared only among the multiple devices of a single radio access network).

These techniques are discussed below primarily with reference to 5G NR technologies, and more specifically with reference to operation of the 5G NR network over an unlicensed carrier (i.e., NR-U operation). However, the techniques of this disclosure can apply to other radio access technologies, and/or to other types of shared carriers (e.g., licensed bands that are shared by devices of a single radio access network). In the case of licensed bands, a channel access procedure of the type described below may or may not be performed.

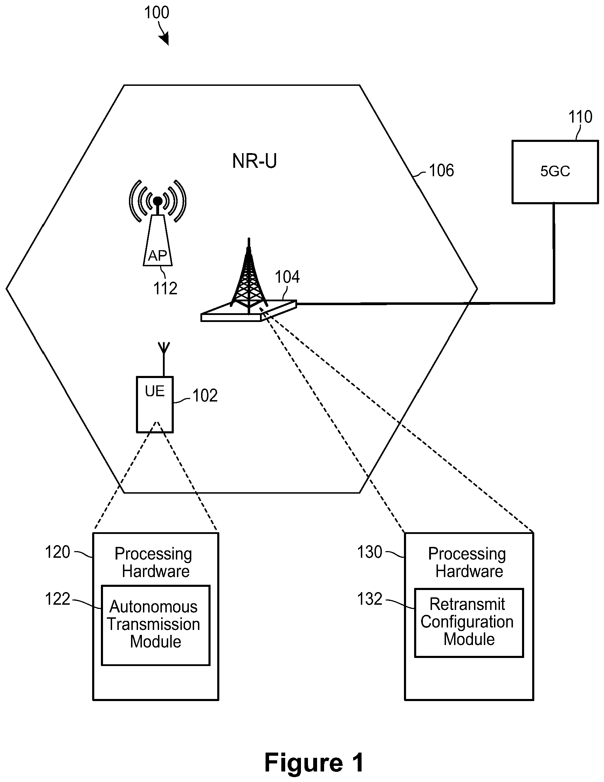

Referring first to Fig. 1, a wireless communication network 100 includes a UE 102, which can be any suitable device capable of wireless communications, as further discussed below. The wireless communication network 100 also includes a base station 104 associated with an NR-U cell 106 and connected (directly or indirectly) to a 5G core network (5GC) 110. The base station 104 may operate as a 5G Node B (gNB), a distributed unit gNB (gNB-DU), or an integrated access backhaul (IAB) node, for example. While Fig. 1 depicts the base station 104 as serving only the cell 106, it is understood that the base station 104 may also cover one or more additional cells not shown in Fig. 1. In general, the wireless communication network 100 can include any number of base stations, and each of the base stations may cover one, two, three, or any other suitable number of cells.

5G NR UEs operating in the cell 106, including the UE 102, can utilize an unlicensed carrier as well as portions of the radio spectrum allocated specifically to the service provider that operates the base station 104 and the 5GC 110. When exchanging data using the 5G NR air interface, the UE 102 and base station 104 may share the unlicensed carrier with other devices of other radio access networks. For example, other UEs (not shown in Fig. 1) may be subscribers of the service provider that operates the base station 104 and the 5GC 110, and be capable of communicating with the base station 104 via the unlicensed carrier. In addition, or alternatively, other UEs utilizing the unlicensed carrier may communicate with a base station or network node other than the base station 104, using a different radio access technology. Fig. 1 depicts an example of one such scenario, in which the UE 102 and base station 104 coexist with an access point (AP) 112. The AP 112 can utilize spectrum that includes, or is included within, at least a portion of the unlicensed carrier when operating in a wireless local area network (WLAN) according to one of the IEEE 802.11 standards. The AP 112 may be configured to communicate with one or more other devices not shown in Fig. 1, such as other UEs, for example. In other implementations and/or scenarios, the UE 102 and base station 104 also, or instead, coexist with devices operating according to other radio access technologies. In still another implementation and/or scenario, the base station 104 does not connect to the 5GC110, and can operate as an AP (e.g., similar to AP 112). Thus, for example, the wireless communication network 100 may omit the 5GC 110, or only use the 5GC 110 in certain scenarios.

The UE 102 is equipped with processing hardware 120, which may include one or more general-purpose processors (e.g., CPUs) and a non-transitory computer-readable memory storing instructions that the one or more general-purpose processors can execute. Additionally or alternatively, the processing hardware 120 may include special-purpose processing units, such as a wireless communication chipset, for example. The processing hardware 120 includes an autonomous transmission module 122. The autonomous transmission module 122 may be implemented using any suitable combination of hardware, software, and/or firmware.

In operation, the autonomous transmission module 122 obtains configured uplink grants from the base station 104 and prioritizes one of the configured uplink grants for transmitting a data packet via the prioritized configured uplink grant. The autonomous transmission module 122 then performs a channel access procedure, such as an LBT procedure, to gain access to the shared carrier in the NR-U cell 106. When the channel access procedure fails, the autonomous transmission module 122 deprioritizes the configured uplink grant and identifies another configured grant opportunity for transmitting the data packet. The autonomous transmission module 122 then transmits the data packet using the other configured grant opportunity via a HARQ new transmission.

The base station 104 is equipped with processing hardware 130, which may include one or more general-purpose processors (e.g., CPUs) and a non-transitory computer-readable memory storing instructions that the one or more general-purpose processors can execute. Additionally or alternatively, the processing hardware 130 may include special-purpose processing units, such as a wireless communication chipset, for example. The processing hardware 130 in the example implementation of Fig. 1 includes a retransmission configuration module 132.

The retransmission configuration module 132 transmits an indication in an RRC message, MAC CE, or Downlink Control Information (DCI) to configure the UE 102 to perform NR-U retransmission. The retransmission configuration module 132 may also transmit an indication to configure the UE 102 with a retransmission counter, so that the UE may retransmit a data packet if the number of transmissions is less than or equal to the retransmission counter.

For simplicity, Fig. 1 does not depict various components of the UE 102 and the base station 104. In addition to the components mentioned above, for example, the UE 102 and the base station 104 include respective transceivers, which include various hardware, firmware, and/or software components configured to transmit and receive wireless signals. The processing hardware 120 and the processing hardware 130 can send commands and exchange information with the respective transceivers as needed to perform various connection establishment procedures, perform various RRC or mobility management (MM), or communicate with other network elements, etc.

As mentioned above, some wireless communication networks allow compatible devices to share an unlicensed carrier with other radio access technologies. In such cases, to promote fair use of the shared medium, devices operating in the unlicensed carrier typically need to perform channel access procedures before transmitting messages. In NR-U, for example, a user device (e.g., a UE) must perform a successful LBT procedure to establish a channel occupancy time (COT) before using the unlicensed carrier to send PUCCH information to a base station (e.g., a gNB).

Also as described above, when an LBT failure occurs, the UE 102 may not autonomously (re)transmit the MAC PDU including the IIOT data with a prioritized configured uplink grant. Additionally, for the prioritized configured uplink grant, the base station 104 does not know that the UE 102 needs to retransmit the MAC PDU and may not schedule retransmission for the UE 102. Accordingly, when an LBT failure occurs, the UE 102 deprioritizes the prioritized configured uplink grant. The UE 102 then selects another configured grant opportunity to transmit the MAC PDU including the IIOT data. Then, the UE 102 may retransmit the MAC PDU using the selected configured grant opportunity.

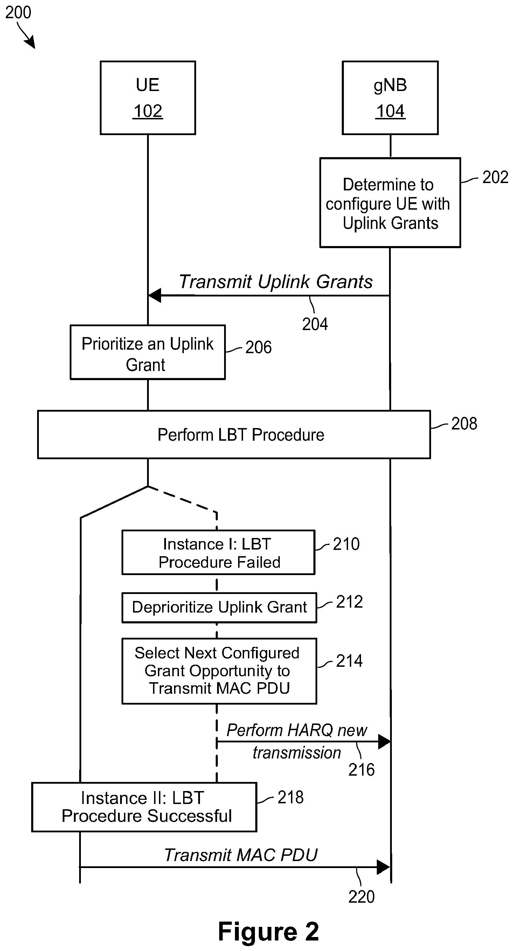

Fig. 2 illustrates an example procedure 200 where the base station 104 determines 202 to configure the UE 102 with multiple uplink grants. The base station 104 then transmits 204 the configured uplink grants to the UE. To transmit IIOT data to the base station 104, the UE 102 prioritizes 206 one of the configured uplink grants. The UE 102 then performs 208 an LBT procedure with the base station 104 for the prioritized configured uplink grant. When the LBT procedure is successful 218, the UE 102 transmits 220 the MAC PDU in a HARQ transmission for the prioritized configured uplink grant.

On the other hand, when the LBT procedure fails 210, the UE 102 deprioritizes 212 the prioritized configured uplink grant. The UE 102 then selects 214 another configured grant opportunity to transmit the MAC PDU. The UE 102 may select the other configured grant opportunity by determining whether the other configured grant opportunity meets certain conditions. These conditions may include: the size of the configured uplink grant matching the size of the MAC PDU, LCHs including the MAC PDU being allowed to use the configured grant opportunity, and/or the configured grant type for the configured grant opportunity being allowed for the LCHs that include the MAC PDU.

If these conditions are met, the UE 102 may select the configured grant opportunity and perform 216 a HARQ transmission of the MAC PDU using the selected configured grant opportunity. In some scenarios, the HARQ process for the selected configured grant opportunity may be different from the HARQ process for the prioritized configured uplink grant. Accordingly, the UE 102 may change the HARQ process for transmitting the MAC PDU to the HARQ process for the selected configured grant opportunity.

The UE 102 may determine whether the UE 102 has been configured for HARQ retransmission in the unlicensed spectrum. For example, the UE 102 may determine whether the UE 102 is configured with a configured grant retransmission timer. If the UE 102 is configured with a configured grant retransmission timer, the UE 102 has been configured for HARQ retransmission in the unlicensed spectrum. In other implementations, the base station 104 may transmit an indication configuring the UE 102 for HARQ retransmission in the unlicensed spectrum via an RRC message, MAC CE, or DCI.

If the UE 102 is configured for HARQ retransmission in the unlicensed spectrum, the UE 102 performs a HARQ retransmission to retransmit the MAC PDU using the configured uplink grant and does not need to deprioritize the configured uplink grant or select another configured grant opportunity. On the other hand, if the UE 102 is not configured for HARQ retransmission in the unlicensed spectrum, the UE 102 deprioritizes the configured uplink grant and selects another configured grant opportunity in the manner described above. The UE 102 then performs a HARQ new transmission to retransmit the MAC PDU using the HARQ process for the selected configured grant opportunity.

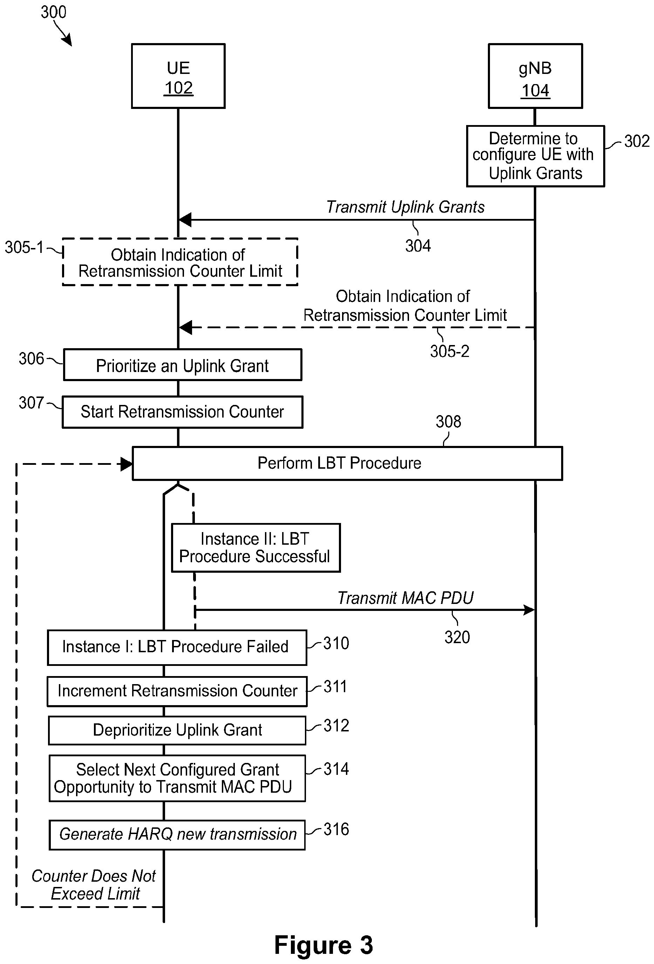

Fig. 3 illustrates an example procedure 300 where the UE 102 is configured with a retransmission counter. In some implementations, the UE 102 may obtain 305-1 a pre-stored retransmission counter limit or the base station 104 may provide 305-2 the retransmission counter limit to the UE 102. To transmit IIOT data to the base station 104, the UE 102 prioritizes 306 one of the configured uplink grants and starts 307 a retransmission counter. The UE 102 then performs 308 an LBT procedure with the base station 104 for the prioritized configured uplink grant. When the LBT procedure is successful 318, the UE 102 transmits 320 the MAC PDU in a HARQ transmission for the prioritized configured uplink grant.

On the other hand, when the LBT procedure fails 310, the UE 102 increments the retransmission counter and deprioritizes 312 the prioritized configured uplink grant. The UE 102 then selects 314 another configured grant opportunity to transmit the MAC PDU. Then the UE 102 generates 316 a HARQ transmission of the MAC PDU for the selected configured grant opportunity. Additionally, the UE 102 determines if the retransmission counter exceeds the retransmission counter limit. If the retransmission counter exceeds the retransmission counter limit, the UE 102 stops retransmitting. Otherwise, the UE 102 performs 308 the LBT procedure with the base station 104 again to retransmit the MAC PDU via the generated HARQ transmission.

In some implementations, the UE 102 may start a configured grant timer, and while the configured grant timer is running, if the number of retransmission is less than or equal to the retransmission counter limit, the UE 102 may retransmit the MAC PDU in a HARQ retransmission or a HARQ new transmission. Otherwise, the UE 102 may stop retransmitting the MAC PDU. The retransmission counter may be reset when the configured grant timer expires or an acknowledgement is received. In some implementations, the configured grant timer may be configured for a particular HARQ process and prevents the same HARQ process ID from being associated with a new transmission for the timer period. The retransmission counter, on the other hand, does not prevent the same HARQ process ID from being associated with a new transmission, such that the HARQ process for transmitting the MAC PDU may be changed to the HARQ process for the selected configured grant opportunity.

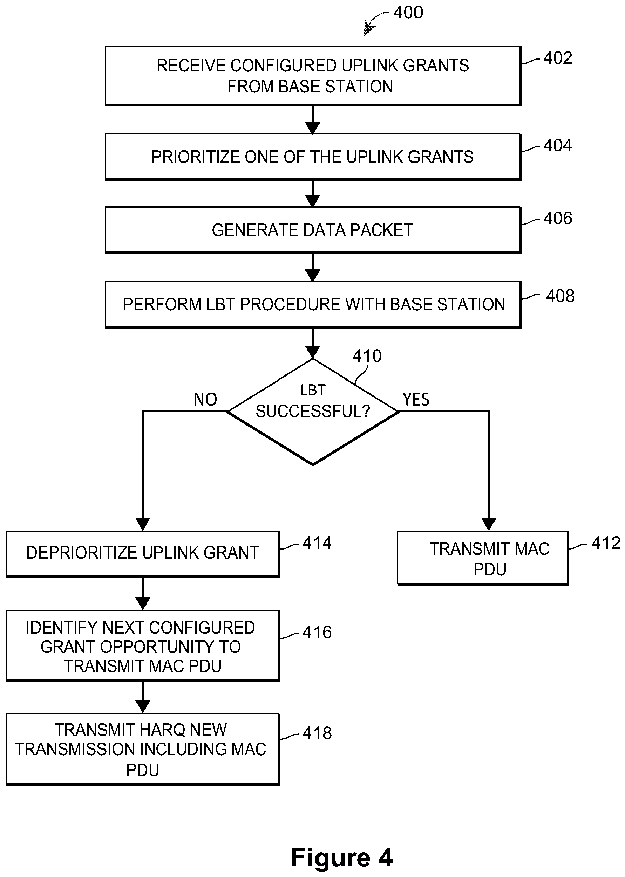

Fig. 4 illustrates an example method 400 for autonomous (re)transmission in the unlicensed spectrum using configured uplink grants when transmitting IIOT data on a communication channel. The method 400 is implemented in a user device such as the UE 102. At block 402, the UE 102 receives configured uplink grants from the base station 104 (e.g., in event 204 in Fig. 2) or the UE 102 obtains configured grants that have been previously received from the base station 104 and stored at the UE 102.

At block 404, the UE 102 prioritizes one of the configured uplink grants (e.g., in event 206 in Fig. 2). At block 406, the UE 102 generates a data packet such as a MAC PDU which may include IIOT data, where the MAC PDU will be transmitted to the base station 104 for the prioritized configured uplink grant. Then at block 408, the UE 102 performs a channel access procedure such as an LBT procedure (e.g., in event 208 in Fig. 2) with the base station 104 for the prioritized configured uplink grant. When the LBT procedure is successful, the UE 102 transmits the MAC PDU in a HARQ transmission for the prioritized configured uplink grant (block 412) (e.g., in event 220 in Fig. 2).

On the other hand, when the LBT procedure fails, the UE 102 deprioritizes the configured uplink grant (block 414) (e.g., in event 212 in Fig. 2). The UE 102 then selects another configured grant opportunity to transmit the MAC PDU (block 416) (e.g., in event 214 in Fig. 2). The UE 102 may select the other configured grant opportunity by determining whether the other configured grant opportunity meets certain conditions. These conditions may include: the size of the configured uplink grant matching the size of the MAC PDU, LCHs including the MAC PDU being allowed to use the configured grant opportunity, and/or the configured grant type for the configured grant opportunity being allowed for the LCHs that include the MAC PDU.

If these conditions are met, the UE 102 may select the configured grant opportunity and perform a HARQ new transmission of the MAC PDU using the selected configured grant opportunity (block 418) (e.g., in event 216 in Fig. 2). In some scenarios, the HARQ process for the selected configured grant opportunity may be different from the HARQ process for the prioritized configured uplink grant. Accordingly, the UE 102 may change the HARQ process for transmitting the MAC PDU to the HARQ process for the selected configured grant opportunity.

In some implementations, the UE 102 may determine whether the UE 102 has been configured for HARQ retransmission in the unlicensed spectrum. For example, the UE 102 may determine whether the UE 102 is configured with a configured grant retransmission timer. If the UE 102 is configured with a configured grant retransmission timer, the UE 102 has been configured for HARQ retransmission in the unlicensed spectrum. In other implementations, the base station 104 may transmit an indication configuring the UE 102 for HARQ retransmission in the unlicensed spectrum via an RRC message, MAC CE, or DCI.

If the UE 102 is configured for HARQ retransmission in the unlicensed spectrum, the UE 102 performs HARQ retransmission to retransmit the MAC PDU using the configured uplink grant and does not need to deprioritize the configured uplink grant or select another configured grant opportunity. On the other hand, if the UE 102 is not configured for HARQ retransmission in the unlicensed spectrum, the UE 102 performs a HARQ new transmission to retransmit the MAC PDU using the HARQ process for the selected configured grant opportunity.

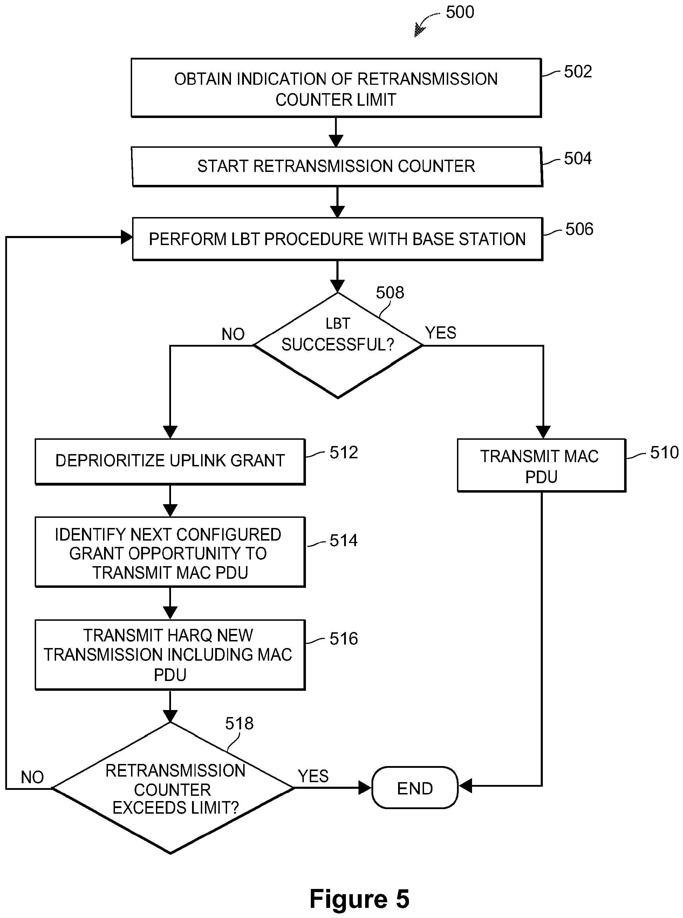

Fig. 5 illustrates another example method 500 for autonomous (re)transmission in the unlicensed spectrum using configured uplink grants when transmitting IIOT data on a communication channel. The method 500 is implemented in a user device such as the UE 102. The method 500 is similar to the method 400 in Fig. 4, but in the method 500 the UE 102 is configured with a retransmission counter.

At block 502, the UE 102 obtains an indication of a retransmission counter limit (e.g., in events 305-1 or 305-2 in Fig. 3). The retransmission counter limit may be pre-stored at the UE 102 or the base station 104 may provide the retransmission counter limit to the UE 102.

The UE 102 receives configured uplink grants from the base station 104 or the UE 102 obtains configured grants that have been previously received from the base station 104 and stored at the UE 102. The UE 102 prioritizes one of the configured uplink grants and generates a data packet such as a MAC PDU which may include IIOT data, where the MAC PDU will be transmitted to the base station 104 for the prioritized configured uplink grant.

Then at block 504, the UE 102 starts a retransmission counter (e.g., in event 307 in Fig. 3). At block 506, the UE 102 performs a channel access procedure such as an LBT procedure (e.g., in event 308 in Fig. 3) with the base station 104 for the prioritized configured uplink grant. When the LBT procedure is successful, the UE 102 transmits the MAC PDU in a HARQ transmission for the prioritized configured uplink grant (block 510) (e.g., in event 320 in Fig. 3).

On the other hand, when the LBT procedure fails, the UE 102 increments the retransmission counter (block 512) (e.g., in event 311 in Fig. 3) and deprioritizes the configured uplink grant. The UE 102 then selects another configured grant opportunity to transmit the MAC PDU (block 514) (e.g., in event 314 in Fig. 3). The UE 102 may generate a HARQ new transmission of the MAC PDU using the selected configured grant opportunity (block 516) (e.g., in event 316 in Fig. 3).

Additionally, the UE 102 determines if the retransmission counter exceeds the retransmission counter limit. If the retransmission counter exceeds the retransmission counter limit, the UE 102 stops retransmitting. Otherwise, the UE 102 performs the LBT procedure with the base station 104 again to retransmit the MAC PDU via the generated HARQ transmission (block 506).

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain implementations are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate, through the principles disclosed herein, still additional alternative structural and functional designs for supporting transmission of IIOT data. Thus, while particular implementations and applications have been illustrated and described, it is to be understood that the disclosed implementations are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method in a UE (102) for communicating in an unlicensed spectrum, the method comprising:
receiving (402), by the UE (102) from a base station (104), a first configured uplink grant configuration for transmitting data in an unlicensed spectrum and a second configured uplink grant configuration for transmitting data in the unlicensed spectrum;
generating (406), by the UE, a data packet for the first configured uplink grant configuration using a first hybrid automatic repeat request, HARQ, transmission scheme;
performing (408), by the UE for the first configured uplink grant configuration, a first listen-before-talk, LBT, procedure; and
in response to determining that the first LBT procedure has failed,
identifying (416), by the UE (102), an opportunity to transmit the data packet using the second configured uplink grant configuration, and
performing, by the UE (102) for the second configured uplink grant configuration, a second LBT procedure; and
in response to determining that the second LBT procedure has been successful,
transmitting, by the UE (102) to the base station, the data packet using a second HARQ transmission scheme different from the first HARQ transmission scheme via the opportunity in a HARQ retransmission.

2. The method of claim 1, further comprising:
prioritizing (404), by the UE (102), the first configured uplink grant configuration over the second configured uplink grant configuration.

3. The method of claim 2, further comprising:
deprioritizing (414), by the UE (102), the first configured uplink grant configuration in response to determining the first LBT procedure has failed.

4. The method of claim 1, further comprising:
configuring, by the UE (102), a retransmission counter; and
retransmitting, by the UE (102) to the base station, the data packet in response to determining that a number of retransmissions is less than or equal to the retransmission counter.

5. The method of claim 4, further comprising:
determining, by the UE (102), that the UE is configured to use a configured grant retransmission timer;
starting, by the UE (102), the configured grant retransmission timer; and
resetting, by the UE (102), the retransmission counter when the configured grant retransmission timer expires.

6. The method of any of the preceding claims, further comprising:
determining, by the UE (102), that the UE is configured to perform retransmission in an unlicensed spectrum.

7. The method of claim 6, wherein determining that the UE (102) is configured to perform retransmission in an unlicensed spectrum includes at least one of:
determining, by the UE (102), that the UE is configured to use a configured grant retransmission timer; or
receiving, by the UE (102) from the base station (104), an indication in a message or control element to perform retransmission in the unlicensed spectrum.

8. The method of any of the preceding claims, wherein at least one of:
a size of the second configured uplink grant configuration matches a size of a protocol data unit, PDU, associated with a media access control, MAC, layer for the data packet;
logical channels including the MAC PDU are allowed to use the second configured uplink grant configuration; or
logical channels including the MAC PDU are allowed to use a configured grant type for the second configured uplink grant configuration.

9. The method of claim 8, further comprising:
adjusting, by the UE (102), a process for transmitting the MAC PDU to the base station (104) from the first HARQ transmission scheme to the second HARQ transmission scheme.

10. A user device (102) comprising processing hardware configured to execute a method according to any of one of claims 1-9.

## Patentansprüche

1. Verfahren in einem Benutzergerät (UE) (102) zum Kommunizieren in einem nicht lizenzierten Spektrum, wobei das Verfahren Folgendes umfasst:
Empfangen (402), durch das UE (102), einer ersten konfigurierten Uplink-Genehmigungskonfiguration von einer Basisstation (104) zum Übertragen von Daten in einem nicht lizenzierten Spektrum und einer zweiten konfigurierten Uplink-Genehmigungskonfiguration zum Übertragen von Daten in dem nicht lizenzierten Spektrum;
Erzeugen (406), durch das UE, eines Datenpakets für die erste konfigurierte Uplink-Genehmigungskonfiguration unter Verwendung eines ersten Hybrid Automatic Repeat Request(HARQ)-Übertragungsschemas;
Durchführen (408), durch das UE, einer ersten Listen-Before-Talk(LBT)-Prozedur für die erste konfigurierte Uplink-Genehmigungskonfiguration; und
als Reaktion auf Bestimmen, dass die erste LBT-Prozedur fehlgeschlagen ist,
Identifizieren (416), durch das UE (102), einer Möglichkeit, das Datenpaket unter Verwendung der zweiten konfigurierten Uplink-Genehmigungskonfiguration zu übertragen, und
Durchführen, durch das UE (102), einer zweiten LBT-Prozedur für die zweite konfigurierte Uplink-Genehmigungskonfiguration; und als Reaktion auf Bestimmen, dass die zweite LBT-Prozedur erfolgreich war,
Übertragen, durch das UE (102), des Datenpakets an die Basisstation unter Verwendung eines zweiten HARQ-Übertragungsschemas, das sich von dem ersten HARQ-Übertragungsschema unterscheidet, über die Möglichkeit in einer HARQ-Neuübertragung.

2. Verfahren nach Anspruch 1, ferner umfassend:
Priorisieren (404), durch das UE (102), der ersten konfigurierten Uplink-Genehmigungskonfiguration gegenüber der zweiten konfigurierten Uplink-Genehmigungskonfiguration.

3. Verfahren nach Anspruch 2, ferner umfassend:
Depriorisieren (414), durch das UE (102), der ersten konfigurierten Uplink-Genehmigungskonfiguration als Reaktion auf Bestimmen, dass die erste LBT-Prozedur fehlgeschlagen ist.

4. Verfahren nach Anspruch 1, ferner umfassend:
Konfigurieren, durch das UE (102), eines Neuübertragungszählers; und
Neuübertragen, durch das UE (102), des Datenpakets an die Basisstation als Reaktion auf Bestimmen, dass eine Anzahl von Neuübertragungen kleiner oder gleich dem Neuübertragungszähler ist.

5. Verfahren nach Anspruch 4, ferner umfassend:
Bestimmen, durch das UE (102), dass das UE dazu konfiguriert ist, einen konfigurierten Genehmigungsneuübertragungszeitgeber zu verwenden;
Starten, durch das UE (102), des konfigurierten Genehmigungsneuübertragungszeitgebers; und
Zurücksetzen, durch das UE (102), des Neuübertragungszählers, wenn der konfigurierte Genehmigungsneuübertragungszeitgeber abläuft.

6. Verfahren nach einem der vorhergehenden Ansprüche, ferner umfassend:
Bestimmen, durch das UE (102), dass das UE dazu konfiguriert ist, eine Neuübertragung in einem nicht lizenzierten Spektrum durchzuführen.

7. Verfahren nach Anspruch 6, wobei Bestimmen, dass das UE (102) dazu konfiguriert ist, eine Neuübertragung in einem nicht lizenzierten Spektrum durchzuführen, mindestens eines der Folgenden beinhaltet:
Bestimmen, durch das UE (102), dass das UE dazu konfiguriert ist, einen konfigurierten Genehmigungsneuübertragungszeitgeber zu verwenden; oder
Empfangen, durch das UE (102) von der Basisstation (104), einer Angabe in einer Nachricht oder einem Steuerelement, eine Neuübertragung in dem nicht lizenzierten Spektrum durchzuführen.

8. Verfahren nach einem der vorstehenden Ansprüche, wobei mindestens eines der Folgenden gilt:
eine Größe der zweiten konfigurierten Uplink-Genehmigungskonfiguration stimmt mit einer Größe einer Protokolldateneinheit (PDU) überein, die einer Media Access Control(MAC)-Schicht für das Datenpaket zugeordnet ist;
logische Kanäle, die die MAC-PDU beinhalten, dürfen die zweite konfigurierte Uplink-Genehmigungskonfiguration verwenden; oder logische Kanäle, die die MAC-PDU beinhalten, dürfen einen konfigurierten Genehmigungstyp für die zweite konfigurierte Uplink-Genehmigungskonfiguration verwenden.

9. Verfahren nach Anspruch 8, ferner umfassend:
Anpassen, durch das UE (102), eines Prozesses zum Übertragen der MAC-PDU an die Basisstation (104) von dem ersten HARQ-Übertragungsschema zu dem zweiten HARQ-Übertragungsschema.

10. Benutzervorrichtung (102), umfassend eine Verarbeitungshardware, die dazu konfiguriert ist, ein Verfahren nach einem der Ansprüche 1-9 auszuführen.

## Revendications

1. Procédé dans un UE (102) pour communiquer dans un spectre sans licence, le procédé comprenant :
la réception (402), par l'UE (102) à partir d'une station de base (104), d'une première configuration d'octroi de liaison montante configurée pour transmettre des données dans un spectre sans licence et d'une seconde configuration d'octroi de liaison montante configurée pour transmettre des données dans le spectre sans licence ;
la génération (406), par l'UE, d'un paquet de données pour la première configuration d'octroi de liaison montante configurée à l'aide d'un premier schéma de transmission de demande de répétition automatique hybride, HARQ ;
l'exécution (408), par l'UE pour la première configuration d'octroi de liaison montante configurée, d'une première procédure d'écoute avant conversation, LBT ; et
en réponse à la détermination que la première procédure LBT a échoué,
l'identification (416), par l'UE (102), d'une opportunité de transmettre le paquet de données à l'aide de la seconde configuration d'octroi de liaison montante configurée, et
l'exécution, par l'UE (102) pour la seconde configuration d'octroi de liaison montante configurée, d'une seconde procédure LBT ; et
en réponse à la détermination que la seconde procédure LBT a été un succès,
la transmission, par l'UE (102) à la station de base, du paquet de données à l'aide d'un second schéma de transmission HARQ différent du premier schéma de transmission HARQ via l'opportunité dans une retransmission HARQ.

2. Procédé selon la revendication 1, comprenant également :
la priorisation (404), par l'UE (102), de la première configuration d'octroi de liaison montante configurée sur la seconde configuration d'octroi de liaison montante configurée.

3. Procédé selon la revendication 2, comprenant également :
la dépriorisation (414), par l'UE (102), de la première configuration d'octroi de liaison montante configurée en réponse à la détermination que la première procédure LBT a échoué.

4. Procédé selon la revendication 1, comprenant également :
la configuration, par l'UE (102), d'un compteur de retransmission ; et
la retransmission, par l'UE (102) à la station de base, du paquet de données en réponse à la détermination qu'un nombre de retransmissions est inférieur ou égal au compteur de retransmission.

5. Procédé selon la revendication 4, comprenant également :
la détermination, par l'UE (102), que l'UE est configuré pour utiliser un temporisateur de retransmission d'octroi configuré ; le démarrage, par l'UE (102), du temporisateur de retransmission d'octroi configuré ; et
la réinitialisation, par l'UE (102), du compteur de retransmission lorsque le temporisateur de retransmission d'octroi configuré expire.

6. Procédé selon l'une quelconque des revendications précédentes, comprenant également :
la détermination, par l'UE (102), que l'UE est configuré pour exécuter une retransmission dans un spectre sans licence.

7. Procédé selon la revendication 6, dans lequel la détermination que l'UE (102) est configuré pour exécuter une retransmission dans un spectre sans licence comporte au moins l'une parmi :
la détermination, par l'UE (102), que l'UE est configuré pour utiliser un temporisateur de retransmission d'octroi configuré ; ou
la réception, par l'UE (102) à partir de la station de base (104), d'une indication dans un message ou un élément de commande pour exécuter une retransmission dans le spectre sans licence.

8. Procédé selon l'une quelconque des revendications précédentes, dans lequel au moins l'un parmi :
une taille de la seconde configuration d'octroi de liaison montante configurée correspond à une taille d'une unité de données de protocole, PDU, associée à une couche de commande d'accès au support, MAC, pour le paquet de données ;
des canaux logiques comportant la PDU MAC sont autorisés à utiliser la seconde configuration d'octroi de liaison montante configurée ; ou
des canaux logiques comportant la PDU MAC sont autorisés à utiliser un type d'octroi configuré pour la seconde configuration d'octroi de liaison montante configurée.

9. Procédé selon la revendication 8, comprenant également :
le réglage, par l'UE (102), d'un processus de transmission de la PDU MAC à la station de base (104) du premier schéma de transmission HARQ au second schéma de transmission HARQ.

10. Dispositif utilisateur (102) comprenant un matériel de traitement configuré pour exécuter un procédé selon l'une quelconque des revendications 1 à 9.
